**Europäisches Patentamt**

**European Patent Office**

**Office européen des brevets**

(11) Veröffentlichungsnummer: **0 061 656**

**B1**

(12) **EUROPÄISCHE PATENTSCHRIFT**

(45) Veröffentlichungstag der Patentschrift: **27.05.87**

(21) Anmeldenummer: **82102183.9**

(22) Anmeldetag: **17.03.82**

(51) Int. Cl.⁴: **F 02 C 7/24, B 64 C 1/40, E 04 B 1/76, E 04 B 1/94, B 32 B 15/14**

(54) **Hitzebeständig ausgekleidete, Verformungen ausgesetzte Wand, sowie Blanket hierfür.**

(30) Priorität: **24.03.81 DE 3111596**

(43) Veröffentlichungstag der Anmeldung:
**06.10.82 Patentblatt 82/40**

(45) Bekanntmachung des Hinweises auf die
Patenterteilung:
**27.05.87 Patentblatt 87/22**

(84) Benannte Vertragsstaaten:
**DE FR GB IT**

(56) Entgegenhaltungen:
FR-A-1 054 606
FR-A-2 092 721
FR-A-2 115 184
FR-A-2 193 171

(73) Patentinhaber: **G + H MONTAGE GmbH**
**Westendstrasse 17**
**D-6700 Ludwigshafen (DE)**

(73) Patentinhaber: **Messerschmitt-Bölkow-Blohm**
**Gesellschaft mit beschränkter Haftung**
**Robert-Koch-Strasse**
**D-8012 Ottobrunn (DE)**

(72) Erfinder: **Kuckein, Wilfried**
**Anzengruberstrasse 69**
**D-8014 Neubiberg (DE)**
Erfinder: **Mylius, Albert**
**Kirchstockacher Strasse 1**
**D-8011 Brunnthal (DE)**
Erfinder: **Bechtel, Peter**
**Edigheimer Strasse 19**
**D-6700 Ludwigshafen (DE)**
Erfinder: **Höfer, Adalbert**
**Haardtstrasse 2**
**D-6703 Limburgerhof (DE)**

(74) Vertreter: **Kuhnen, Wacker & Partner**
**Schneggstrasse 3-5 Postfach 1729**
**D-8050 Freising (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Blanket zur Bildung einer Wärmedämmlage für eine vor Wärmeeinwirkung im Betrieb zu schützende und mit einer Standzeit gegen Flammeneinwirkung zu versehende Wand nach dem ersten Teil des Anspruchs 1 sowie eine Wand mit einer aus solchen Blankets bestehende Wärmedämmlage nach dem ersten Teil des Anspruchs 2.

Beispielsweise bei GKF-Abdeckwänden von Triebwerksräumen an Hubschraubern besteht das Problem, daß bei laufendem Triebwerk in dem Triebwerksraum Temperaturen von über 200°C auftreten können, die für den glasfaserverstärkten Kunststoff der Wand schädlich sind, so daß eine Wärmedämmung für die Wand erforderlich ist. Weiterhin soll eine wärmedämmende Auskleidung der Wand auch Brandschutzfunktion in der Weise übernehmen, daß der Brand durch die Auskleidung für eine bestimmte Zeitspanne aufgehalten wird, bevor ein Übergreifen etwa auf Bereiche der Führerkabine möglich ist. Hierzu wird gefordert, daß die Auskleidung ohne lokale Zerstörungen und ohne Änderung ihrer Lage an der Wand über fünf Minuten hinweg eine Temperatur von 1100°C aushalten kann.

Ein besonderes Problem ergibt sich daraus, eine Auskleidung zu finden, die bei einer maximalen Dauertemperatur im Triebwerksraum von etwa 250°C eine Erwärmung der Innenfläche der Abdeckwand auf weniger als 200°C begrenzt, im Brandfall die geforderte Standfestigkeit besitzt, bevor Zerstörungen auftreten, und darüber hinaus mechanische Eigenschaften besitzt und derart an der Abdeckwand befestigt ist, daß keinerlei mechanische Beschädigungen durch Verwindungen und Verformungen der Abdeckwand an deren Auskleidung auftreten; darüber hinaus muß die Auskleidung natürlich in der Lage sein, der unregelmäßigen Form der Abdeckwand schmiegsam zu folgen.

In der Praxis wurde bisher für die Auskleidung Asbestpappe verwendet, deren eine Seite durch eine Klebstoffschicht mit der Abdeckwand verbunden ist und deren andere Seite einen im Brandfall aufschäumenden Farbaufstrich besitzt. Der Farbaufstrich ist zum Abschluß gegen Feuchtigkeit mit einem farblosen Polyurethan-Lack überzogen.

Eine Wand mit einer derartigen Auskleidung ist für viele Einsatzfälle, so beispielsweise als Abdeckwand eines Hubschrauber-Triebwerksraumes, nur bedingt geeignet. Es ergaben sich besonders Probleme dadurch, daß die Asbestpappe an der Innenfläche der Wand schlecht klebt und daher bei Erschütterungen zu einer Ablösung von der Wand neigt. Der schäumende Farbaufstrich setzt mit seiner Schäumreaktion bei einer Temperatur von geringfügig über 200°C ein, und unter ungünstigen Bedingungen reicht der Überzugs-Polyurethan-Lack nicht aus, um jegliche Schäumungsreaktion bereits bei hoher Betriebstemperatur im Triebwerksraum zu unterbinden. Als Folge hiervon setzen lokale Schäumreaktionen ein, die ihrerseits den abdeckenden Polyurethan-Lack lokal auswölben und zerstören, so daß Feuchtigkeit in den Bereich des Farbaufstriches gelangen kann und der unter dem abgeplatzten Lack hervortretende Farbaufstrich unter der Betriebstemperatur weiter ausschäumt.

In der FR—A—1054606 wird eine schalldämmende Wärmedämmlage beschrieben, die in Deckenform in den Hohlraum zwischen der Außenhaut und der Kabinenwand eines Flugzeuges unter entsprechender Verankerung und Lagesicherung an den dortigen Quer- und Längsspanten eingebracht wird, an die jedoch keinerlei Anforderungen bezüglich der Standzeit im Brandfall gestellt werden. Die FR—A—2193171 offenbart eine Wärmedämmlage mit einer Wärmedämmschicht aus Metallfilamenten in filzartiger Anordnung, wobei die Körperleitung der Wärme nur durch punktförmige gegenseitige Anlage der Metallfilamente infolge der entsprechenden Querschnittsform minimiert ist und die eingeschlossene Luft die Wärmedämmung bildet. Ein solcher Metallfilament-Filz weist erhebliche Steifigkeit auf. Eine solche Dämmung wird ganzflächig aufgebaut und ergibt daher Probleme im Zusammenhang mit der Montage und Befestigung. Die FR—A—2115184 offenbart die Verkleidung einer Triebwerkswand mit großflächigen, nicht vorgefertigten, sondern vor Ort aufgebrachten Einzelschichten.

Nach FR—A—2092721 werden säulenförmige Träger aus Metallprofil mit einer Ummantelung versehen, die das Aussehen der Träger verbessern und im Falle eines Feuers ihre Standzeit erhöhen sollen. Wenn der Träger eine besonders große Länge oder Höhe aufweist, werden Elemente, die aus einer inneren Stützschicht in Form eines Netzes oder dergleichen, einer Schicht aus Mineralfasermaterial und einer äußeren Abdeckung in Form eines Metallbleches bestehen, fluchtend aneinander liegend übereinander angeordnet. Die gegenseitige Abstützung der so übereinander angeordneten Elemente erfolgt über entsprechende Abkröpfungen der Abdeckbleche, die somit gegenseitige Anschläge bilden. Die vorgefertigten, durch abgewinkelte Blechabdeckung ausgesteiften Wärmedämmlagen können zunächst durch Klebung an einem Schenkel des H-Trägers befestigt werden. Zusätzlich erfolgt eine Lagesicherung durch Verschraubung an besonderen zusätzlichen Unterkonstruktionen. Sollen großflächige ebene Wände mit einer solchen Konstruktion verkleidet werden, müssen die vorgefertigten Baueinheiten der Wärmedämmlage entweder pro Schicht einstückig oder in Elementbauweise mit einer der Wandfläche entsprechenden Flächendimension vorgefertigt werden. Sofern die Wand unregelmäßige Wölbungen aufweist, muß eine entsprechende Formgebung des äußeren Abdeckbleches in der Vorfertigung erfolgen. Weiterhin wäre das Gewicht der Wärmedämmlage wegen des massiven Abdeckbleches so groß, daß eine Anwendung im Flugzeugbau ausgeschlossen ist.

Der Erfindung liegt daher die Aufgabe zugrunde, ein Blanket zur Bildung einer Wärmedämmlage der im Oberbegriff des Anspruchs 1 angegebenen Gattung zu schaffen, das auch für eine Verkleidung von unregelmäßif gewölbten Wänden wie etwa kuppelförmigen Abdeckwänden in Flugzeugen geeignet ist und auch unter ungünstigen Betriebsbedingungen den gewünschten Brand- und Wärmeschutz über lange Zeiträume hinweg sicher bjetet.

Die Lösung dieser Aufgabe erfolgt durch die kennzeichnenden Merkmale des Anspruchs 1.

Durch die Vorfertigung der Auskleidung aus einer Wärmedämmlage aus biegeweichen Blankets wird der Aufwand für die Herstellung und Anbringung der Auskleidung weitergehend in die Vorfertigungsstufe verlagert, so daß rationell gearbeitet werden kann. Die vorgefertigten und gemäß dem jeweils gewünschten Formen mit erforderlichen Biegungen usw. zugeschnittenen Blankets brauchen dann lediglich an ihrer Rückseite mit Kleber versehen und an die Innenseite der Abdeckwand angedrückt zu werden, wo sie sich Biegungen problemlos anpassen und gut haften. Infolge der Biegeweichheit der Blankets können diese auch Verformungen oder Verwindungen der Abdeckwand, auch Vibrationsbewegungen im Betrie, problemlos folgen. Bei der Montage werden die Blankets mit ihren weichen Randeinfassungen unter einen Abdichtdruck gestoßen, so daß auch bei Verformungen und Verwindungen der Wand keine Fugen zwischen den Blankets auftreten können. Die Metallfolie an der Innenseite der Blankets dient primär dem Brandschutz und verhindert einen direkten Zugang von von Flammen zum Mineralfaserfilz. Insbesondere bei Herstellung der Metallfolie mit einer spiegelnden Oberfläche übernimmt diese auch einen Teil der Wärmedammfunktion durch Reflexion von Wärmestrahlung. Der hinter der Metallfolie angeordnete Mineralfaserfilz hat überwiegend Wärmedämmfunktion und stellt sicher, daß bei maximalen Dauertemperaturen im Betrieb von etwa 250°C die Temperatur an der Innenfläche der Wand unterhalb von 200°C gehalten wird. Durch Kombination der inneren Metallfolie mit der dahinterliegenden Schicht aus Mineralfaserfilz ergibt sich die gewünschte zeitliche Verzögerung eines Übergriffs von Flammen auf den Bereich hinter den Blankets im Falle eines Brandes.

Anspruch 2 betrifft eine Wand mit aus den erfindungsgemäßen Blankets bestehender Wärmedämmlage.

Die abhängigen Ansprüche haben vorteilhafte Weiterbildungen der Erfindung zum Inhalt.

Weitere Einzelheiten der Erfindung ergeben sich aus der nachfolgenden Beschreibung einer Ausführungsform anhand der Zeichnung.

Es zeigt

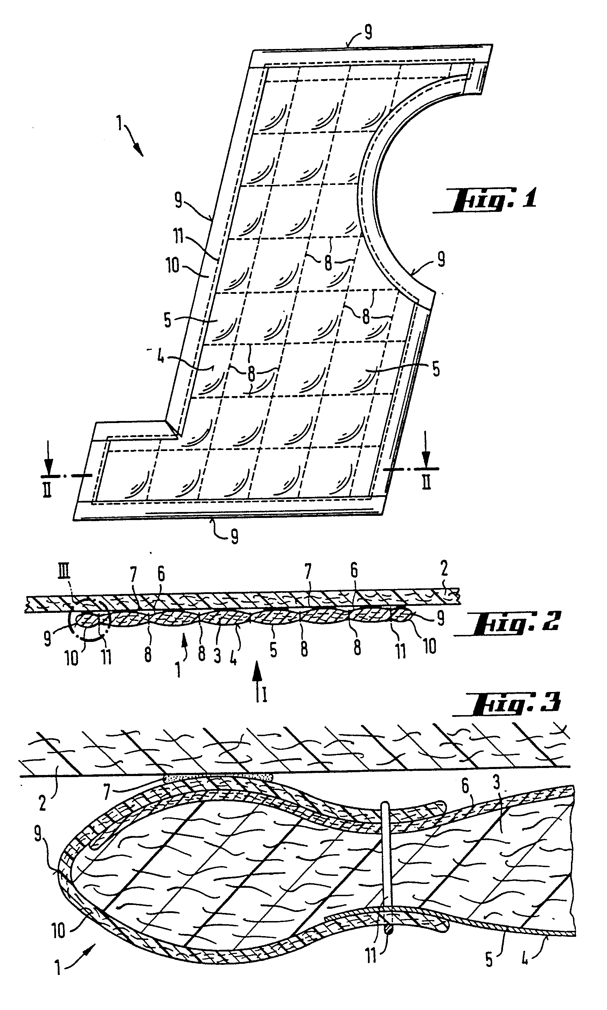

Fig. 1 eine Draufsicht auf ein Blanket der erfindungsgemäßen Art,

Fig. 2 einen Schnitt gemäß Linie II—II in Fig. 1 durch das durch Klebung an der Wand befestigte Blanket, und

Fig. 3 die Einzelheit aus Kreis III in Fig. 2 in vergrößerter Darstellung.

In der Zeichnung ist mit 1 ein Blanket bezeichnet, wie es den jeweiligen Verhältnissen entsprechend zugeschnitten vorgefertigt zur Bildung einer hitzebeständigen Auskleidung einer Wand 2, beispielsweise einer Abdeckwand des Triebwerksraums eines Hubschraubers, verwendet wird. Die Wand 2 ist unregelmäßig geformt und im Betrieb des Hubschraubers Verwindungen und Vibrationen ausgesetzt. Sie möge im Beispielsfalle aus glasfaserverstärktem Kunststoff bestehen, der bis etwa 200°C beständig ist und daher vor höherem Temperatureinfall geschützt werden muß.

Jedes Blanket 1 weist als funktionell wesentliche Bestandteile eine Schicht 3 aus Mineralfaserfilz mit einer Abdeckung 4 in Form einer Metallfolie 5 auf, die an der der Wand 2 gegenüberliegenden Seite der Schicht 3 angeordnet ist und so die Schicht 3 gegenüber dem von der Wand 2 umschlossenen Innenraum abdeckt. Zur Bildung der Schicht 3 ist im Beispielsfalle eine Aluminiumsilikatfasermatte mit einem Raumgewicht zwischen 50 und 100 $kg/m^3$, im Beispielsfalle 64 $kg/m^3$, vorgesehen. Die Schicht 3 weist im Beispielsfalle eine Maximaldicke von 6 mm auf, die im wesentlichen der Dicke des Blankets 1 entspricht, jedoch kann auch eine dickere Schicht bis etwa zur Größenordnung 15 mm verwendet werden, ohne die Biegeweichheit und die leichte Anschmiegbarkeit der Blankets 1 auch an starke Krümmungen wesentlich zu beeinträchtigen.

Die Metallfolie 5 ist im Beispielsfalle eine 0,04 mm dicke Edelstahlfolie, speziell eine Chrom-Nikel-Stahlfolie gemäß DN-Spezifikationen 14301 bis 14541. Es können auch dickere Folien bis zu einer Dicke von etwa 0,1 mm eingesetzt werden, ohne die gewünschten mechanischen Eigenschaften des Blankets 1 zu beeinträchtigen.

An der Rückseite der Schicht 3 ist eine dünne Stützschicht 6 vorgesehen, die über bereichsweise aufgebrachten Klebstoff 7 mit der Innenfläche der Wand 2 verbunden ist. Das Material der Stützschicht 6 wird einmal mit Blick auf die gute Klebebefestigung an der Wand 2 und zum anderen mit Blick auf die Verankerungsfähigkeit für Fäden von Steppnähten 8 gewählt, mit denen die Abdeckung 4 aus Metallfolie 5 über die Schicht 3 hinweg an der Stützschicht 6 gehalten ist. Im Beispielsfalle wird für die Stützschicht 6 ein Glasgewebe gewählt, welches über einen Silikon-Klebstoff 7 an der Wand 2 aus GFK festlegbar ist. Ein derartiger Silikonkleber weist, ebenso wie das Glasgewebe der Stützschicht 6, eine relativ hohe Temperaturbeständigkeit einerseits sowie eine gute Biegeelastizität oder Biegeweichheit andererseits auf, so daß auch bei starken Verwindungen und Verformungen oder Vibrationen der Wand 2 keine Ablösungserscheinungen zu befürchten sind.

Um die Stirnkanten der Schicht 3 aus Mineralfaserfilz abzudecken, ist jedes Blanket 1 über den gesamten Umfang seines Randes mit einer Randeinfassung 9 versehen, die im Beispielsfalle durch ein Glasfilamentgewebeband 10 gebildet ist, welches durch eine ähnlich wie die Steppnaht 8 geführte Befestigungsnaht 11 befestigt ist. Die Lagesicherung der Randeinfassung 9 durch die Befestigungsnaht 11 erfolgt dabei in der Weise, daß das Gewebeband den Rand des Blankets schlaff umgibt, also nicht unter Zugspannung steht. Die Metallfolie 5 der Abdeckung 4 ist, wie insbesondere aus Fig. 3 ersichtlich ist, im Randbereich des Blankets um einige Millimeter kürzer gehalten als die Schicht 3 aus Mineralfaserfilz, so daß bei Druckbelastung der Randeinfassung 9 in der Ebene des Blankets 1 der Filz zusammen mit dem Glasgewebe der Stützschicht 6 leicht verformt werden kann. Auf diese Weise ist es möglich, die Blankets mit den Rändern unter einem Abdichtdruck aneinander zu befestigen, derart, daß sowohl Wärmebrücken als auch ein Durchschlagen von Flammen im Bereich der Ränder der Blankets ausgeschlossen werden können.

Das Material für die Steppnähte 8 und die Befestigungsnähte 11 ist zweckmäßig ebenfalls zumindest schwer entflammbar, jedoch spielt dies mit Rücksicht auf die geringe Querschnittsstärke der Fäden eine nur untergeordnete Rolle. Im Beispielsfalle wird für die Steppnaht 8 und die Befestigungsnaht 11 Textilfilamentgarn verwendet, im Bedarfsfall ist jedoch auch eine Verwendung von Glaszwirn oder Quarzgarn hierfür möglich.

Wie die vorstehende Beschreibung zeigt, sind vielfache Abwandlungen und Abänderungen möglich, ohne den Rahmen der Erfindung, wie in den Ansprücher angegeben zu verlassen. So ist beispielsweise auch nicht erforderlich, daß die Wand 2 aus einem Werkstoff wie glasfaserverstärktem Kunststoff besteht, der nur in geringem Umfang temperaturbeständig ist. Eine vorteilhafte Wirkung der Auskleidung in Form der Blankets 1 ergibt sich auch im Falle hochtemperaturbeständiger Werkstoffe für die Wand 2, da in jedem Falle mittels der Blankets 1 eine Wärmedämmwirkung und zusätzlich eine feuerhemmende Wirkung erzielt wird. Weiterhin kann die Erfindung nicht nur bei der Auskleidung von Triebwerksräumen von Flugzeugen oder dergleichen, sondern überall dort zum Einsatz gelangen, wo ähnliche Probleme auftreten.

**Patentansprüche**

1. Blanket zur Bildung einer Wärmedammmlage für eine vor Wärmeeinwirkung im Betrieb zu schützende und mit einer längeren Standzeit gegen Flammeneinwirkung zu versehende Wand (2), mit einer der Wand (2) abgewandten metallischen Abdeckung (4) und einer dahinterliegenden Schicht (3) aus Mineralfaserfilz, die über eine der Wand (2) benachbarte Stützschicht (6) mittels Klebung an der Wand (2) befestigbar ist, wobei die Abdeckung (4), die Schicht (3) aus Mineralfaserfilz und die Stützschicht (6) vorgefertigt sind, dadurch gekennzeichnet,

a) daß die Abdeckung (4) eine Metallfolie (5) ist,

b) daß die Metallfolie (5) und die Stützschicht (6) mittels Steppnähten (8) miteinander und mit der Schicht (3) aus Mineralfaserfilz verbunden sind,

c) daß das Blanket (1) mit einer weichen Randeinfassung (9) aus anorganischem Material versehen ist, welche die Außenseiten der Metallfolie (5) und der Stützschicht (6) umgreift und an diesen mittels einer randparallelen Befestigungsnaht (11) im wesentlichen ohne Spannung lagegesichert ist, und

d) daß die Metallfolie (5) Randbereiche aufweist, die in einem Abstand von mehreren Millimetern vom Rand des Blankets (1) enden.

2. Wand mit einer Wärmedämmlage, die eine Mehrzahl von Blankets (1) nach Anspruch 1 enthält, dadurch gekennzeichnet, daß die Wärmedämmlage zur Dämmung der Erschütterungen bzw. Verformungen ausgesetzten Wand (2) aus einzeln vorgefertigten, mit ihren Rändern unter Abdichtdruck in der Ebene der Wärmedämmlage seitlich aneinander anstoßenden biegeweichen Blankets (1) besteht, die im Verbund eine fugenlose Verkleidung der zu schützenden Oberfläche der Wand (2) bilden.

3. Wand mit einer Wärmedämmlage nach Anspruch 2, dadurch gekennzeichnet, daß die Metallfolie (5) eine spiegelnde Außenoberfläche aufweist.

4. Wand mit einer Wärmedämmlage nach Anspruch 2 oder 3, gekennzeichnet durch eine Edelstahlfolie als Metallfolie (5).

5. Wand mit einer Wärmedämmlage nach einem der Ansprüche 2 bis 4, gekennzeichnet durch ein Glasgewebe als Stützschicht (6).

6. Wand mit einer Wärmedämmlage nach einem der Ansprüche 2 bis 5, dadurch gekennzeichnet, daß ein Klebstoff (7) zur klebenden Befestigung der Blankets (1) nur in Bereichen neben den Steppnähten (8) vorgesehen ist.

7. Wand mit einer Wärmedämmlage nach Anspruch 6, dadurch gekennzeichnet, daß der Klebstoff (7) gute biegeelastiche Eigenschaften aufweist.

8. Wand mit einer Wärmedämmlage nach einem der Ansprüche 2 bis 7, dadurch gekennzeichnet, daß die Randeinfassung (9) durch ein Gewebeband (10) aus anorganischem Material, insbesondere aus Glasfilamenten gebildet ist.

**Revendications**

1. Elément isolant préfabriqué pour former une couche thermiquement isolante une paroi (2) qui est à protéger de l'action de la chaleur en exploitation et doit présenter une durée de résistance assez longue à l'égard de l'action des flammes, comportant un revêtement métallique (4) côté opposé à la paroi (2) et une couche, située par-dessous, (3) de feutre de fibres minérales, que l'on peut fixer à la paroi (2) au moyen de colle par l'intermédiaire d'une couche de protection (6) voisine de la paroi (2), étant précisé que le revêtement (4), la couche (3) en feutre de fibres minérales et la couche de protection (6) sont préfabriqués, caractérisé

a) en ce que le revêtement (4) est une feuille de métal (5),

b) en ce que la feuille de métal (5) et la couche de protection (6) sont réunies l'une à l'autre et à la couche (3) de feutre de fibres minérales au moyen de coutures piquées (8),

c) en ce que l'élément isolant préfabriqué (1) comporte une monture de bordure souple en matériau non organique, qui entoure les faces extérieures de la feuille de métal (5) et de la couche de protection (6) et qui est fixée en position à ces faces au moyen d'une couture de fixation parallèle au bord (11), essentiellement sans tension, et

d) en ce que la feuille de métal (5) présente des zones de bordure qui se terminent à une distance de plusieurs millimètres du bord de l'élément isolant préfabriqué (1).

2. Paroi comportant une couche thermiquement isolante qui contient une pluralité d'éléments isolants préfabriqués (1) selon la revendication 1, caractérisée en ce que la couche thermiquement isolante, pour isoler la paroi (2) exposée aux vibrations et aux déformations, est constituée de différents revêtements isolants préfabriqués, souples au cintrage, qui sont raboutés l'un contre l'autre latéralement par leurs bords sous une pression assurant l'étanchéité, dans le plan de la couche thermiquement isolante et qui forment, en combinaison, un garnissage sans joint de la surface de la paroi (2) à protéger.

3. Paroi comportant une couche thermiquement isolante selon la revendication 2, caractérisée en ce que la feuille de métal (5) présente une surface extérieure polie miroir.

4. Paroi comportant une couche thermiquement isolante selon la revendication 2 ou 3, caractérisée par une feuille d'acier inoxydable comme feuille de métal (5).

5. Paroi comportant une couche thermiquement isolante selon l'une des revendications 2 à 4, caractérisée par un tissu de verre comme couche de protection (6).

6. Paroi comportant une couche thermiquement isolante selon l'une des revendications 2 à 5, caractérisée en ce qu'il n'est prévu de colle (7) pour fixer l'élément isolé préfabriqué (1) par collage que dans les zones proches des coutures piquées (8).

7. Paroi comportant une couche thermiquement isolante selon la revendication 6, caractérisée en ce que le collage (7) présente de bonnes caractéristiques au point de vue élasticité au cintrage.

8. Paroi comportant une couche thermiquement isolante selon l'une des revendications 2 à 7, caractérisée en ce que la monture de bordure (9) est formée par une bande de tissu (10) en matériau non organique, en particulier en filaments de verre.

## Claims

1. Blanket for forming a layer of heat insulation for a wall (2) to be protected against heat effects during operation and to withstand flame effects for a relatively long period of time, with a metal covering (4) facing away from the wall (2) and with a layer (3) of mineral-fibre felt which is located behind the metal covering (4) and which can be fastened to the wall (2) by gluing via a supporting layer (6) adjacent to the wall (2), the covering (4), the layer (3) of mineral-fibre felt and the supporting layer (6) being prefabricated, characterized in that

a) the covering (4) is a metal foil (5),

b) the metal foil (5) and the supporting layer (6) are joined to one another and to the layer (3) of mineral-fibre felt by means of quilting seams (8),

c) the blanket (1) is provided with a soft edge trimming (9) made of inorganic material, which surrounds the outer faces of the metal foil (5) and of the supporting layer (6) and which is secured in position on these, essentially without tension, by means of a fastening seam (11) parallel to the edge, and

d) the metal foil (5) has edge regions which end at a distance of several millimetres from the edge of the blanket (1).

2. Wall with a layer of heat insulation which contains a plurality of blankets (1) according to claim 1, characterized in that the layer of heat insulation for insulating the wall (2) exposed to vibrations or deformations consists of individually prefabricated highly flexible blankets (1) which abut one another laterally under sealing-off pressure in the plane of the layer of heat insulation and which, as a composite structure, form a continuous cladding of the surface of the wall (2) to be protected.

3. Wall with a layer of heat insulation according to claim 2, characterized in that the metal foil (5) has a reflecting outer surface.

4. Wall with a layer of heat insulation according to claim 2 or 3, characterized by a fine-steel foil as a metal foil (5).

5. Wall with a layer of heat insulation according to one of claims 2 to 4, characterized by a glass cloth as a supporting layer (6).

6. Wall with a layer of heat insulation according to one of claims 2 to 5, characterized in that an adhesive (7) for fastening the blankets (1) by gluing is provided only in regions next to the quilting seams (8).

7. Wall with a layer of heat insulation according to claim 6, characterized in that the adhesive (7) has good flexibility properties.

8. Wall with a layer of heat insulation according to one of claims 2 to 7, characterized in that the edge trimming (9) is formed by a cloth strip (10) made of inorganic material, especially glass filaments.

**_Fig. 1_**

**_Fig. 2_**

**_Fig. 3_**